# EUROPEAN PATENT SPECIFICATION

(11) **EP 3 205 003 B1**
(45) Date of publication and mention of the grant of the patent: **04.12.2019**
(21) Application number: 14781244.0
(22) Date of filing: 08.10.2014
(51) Int. Cl.: H02K 7/09, F16C 32/04

(54) **SUPPORT ARRANGEMENT IN AN ELECTRIC MACHINE**
STÜTZANORDNUNG BEI EINER ELEKTROMASCHINE
STRUCTURE DE SUPPORT POUR MACHINE ELECTRIQUE

(43) Date of publication of application: 16.08.2017
(73) Proprietor: ABB Schweiz AG, 5400 Baden (CH)
(72) Inventor: ROIVAINEN, Janne, FIN-00380 Helsinki (FI); LYLY, Mikko, FIN-00380 Helsinki (FI); KILPELÄINEN, Toni, FIN-00380 Helsinki (FI)
(74) Representative: Kolster Oy Ab
(86) International application number: PCT/EP2014/071548
(87) International publication number: WO 2016/055105

(56) References cited:
- CA-A1- 2 874 537
- DE-A1-102008 036 123
- US-A1- 2011 285 233
- US-B1- 6 376 950
- US-B1- 6 617 720

## Description

### FIELD OF THE INVENTION

The invention relates to an electric machine according to the preamble of claim 1.

The electric machine comprises an electric motor and a drive device fitted into a common frame so that the drive device is directly connected to a shaft of the electric motor. Each end of the shaft of the electric motor is supported with a radial magnetic bearing at a bearing shield. The bearing shield is supported at the frame of the electric machine.

### BACKGROUND ART

The use of automatic magnetic bearings is a mature technology for many application areas. Most of the applications are for small rotating machines, but automatic magnetic bearings have also been employed in large electric machines having a power of over 1 MW and a rotation speed of over 10 000 rpm.

An automatic magnetic bearing comprises radial magnetic bearings for rotatably supporting the shaft of the electric machine in a desired radial position and an axial magnetic bearing for keeping the shaft of the electric machine in a desired axial position.

A typical radial magnetic bearing comprises an actuator, a position sensor and a safety bearing. The actuator, the position sensor and the safety bearing are fitted into a first cylinder. There is further a flange on the outer surface of the first cylinder. This radial bearing package comprising the actuator, the position sensor, the safety bearing, the first cylinder and the flange is attached from the flange to the bearing shield. The bearing shield is attached to the frame of the electric machine.

The actual radial magnetic bearing comprises a stator i.e. the actuator fitted around the shaft and secured to the frame of the electric machine. The rotor of the radial magnetic bearing is a sleeve fitted on the outer periphery of the shaft of the electric machine and secured against rotation and axial movement. The stator of the radial magnetic bearing comprises electromagnets positioned radially around the shaft at a distance from the shaft. The electromagnets are controlled by a control system by varying the current in the electromagnets in response to the signals of the position sensor.

The axial magnetic bearing comprises a bearing collar in the form of a flat solid ferromagnetic disc which is secured to the shaft of the electric machine. Disc-shaped electromagnets are situated on either side of the collar and secured to the frame of the electric machine. The electromagnets keep the shaft in a desired axial position.

The most common displacement sensor type used together with radial magnetic bearings is an inductive displacement sensor. Usually, the inductive displacement sensor is arranged in a ring form around the shaft of the electric machine. The radial displacement measurements may be done in several directions across the shaft of the electric machine. The signals coming from opposite sides of the shaft are averaged.

An increase in the speed and/or the size of the electric machine will also increase the relative flexibility of the system. The control of flexible systems is more challenging compared to the control of rigid rotor-support systems. A flexible system has a wider mechanical vibration bandwidth requiring better design of the feedback controller at high frequencies. The sensor and the actuator of the radial magnetic bearing are normally situated at an axial distance from each other, which often results in a node between the sensor and the actuator. This makes the situation even more challenging.

The above mentioned challenges have resulted in that the bearing shield construction must be designed so that the natural frequency of the S-mode of the bearing shield construction is at least over 500 Hz for a large subcritical high speed electric motor i.e. an electric motor with a power of at least 1 MW and a rotation speed of at least 10 000 rpm. This requirement means that the bearing shield and the frame end structure must be very stiff.

There are two vibration modes present in a bearing shield construction i.e. the umbrella-mode and the S-mode. The natural frequency of the umbrella-mode is usually much lower than the natural frequency of the S-mode. The umbrella-mode does also not couple to the control loop of the actuator of the radial magnetic bearing. The S-mode, on the contrary, with a non-concentric sensor and actuator couples strongly to the control loop of the actuator of the radial magnetic bearing, and may have even a modal node between the sensor and the actuator. In general, only the anti-symmetric modes are critical from the control point of view. The S-mode is therefore the more important one to be taken into account when designing a support construction for a radial magnetic bearing.

CA 2 874 537 discloses an end plate for an electric machine. The end plates are fitted to a frame of the electric machine at each end of the electric machine. Each end of the shaft of the electric machine is rotatable supported on a radial magnetic bearing. The end plate comprises a bearing receptacle into which the magnetic bearing is positioned for rotatably supporting the rotor to the frame of the electric machine.

US 6 376 950 discloses a combined bearing plate and stator frame for an air compressor powered by an electric motor. The air compressor includes a crankshaft rotationally supported by a rotational bearing, and the electric motor includes a rotor and a stator substantially surrounding the rotor. The rotor is mounted on a portion of the crankshaft for rotation therewith. The combined bearing plate and stator frame is adapted for integration into the air compressor so as to provide a bearing plate for mounting of the rotational bearing and a stator frame for mounting of the stator therein and aligning the stator with the rotor mounted on the portion of the crankshaft. The combined bearing plate and stator frame includes a bearing plate member and a stator frame member, the bearing plate member and the stator frame member being integrally formed from a single piece of material.

DE 10 2008 036 123 discloses a bearing shield for a dynamoelectric machine. The bearing shield comprises a recess for a roller bearing. The bearing shield is formed of a first material and the recess comprises an additional second material. The second material is different from the first material.

### BRIEF DESCRIPTION OF THE INVENTION

An object of the present invention is to achieve an improved electric machine.

The electric machine according to the invention is characterized by what is stated in the characterizing portion of claim 1.

The integration of the radial magnetic bearing and the bearing shield into a single unit will increase the stiffness of the unit compared to a situation where the radial magnetic bearing has been fastened to the bearing shield through a flange.

The increased stiffness is an advantage when dimensioning the bearing shield. The bearing shield in an arrangement according to the invention can be made lighter compared to a prior art bearing shield in a situation where the natural frequency of the S-mode of both bearing shield constructions is the same. A calculation shows that a bearing shield arrangement according to the invention could be made at least 20% lighter compared to a prior art bearing shield arrangement when both bearing shield arrangements have the same natural S-mode frequency. This will result in cost savings.

A further advantage with the support arrangement according to the invention is that the cooling of the radial magnetic bearing is more efficient in the invention. The heat conduction between the radial magnetic bearing and the bearing shield is more efficient due to the integrated construction.

The definition that the radial magnetic bearing and the bearing shield are integrated into a single unit means that there is a permanent and continuous connection between the radial magnetic bearing and the bearing shield. It is thus not possible to disassemble the unit i.e. separate the radial magnetic bearing and the bearing shield without breaking the unit.

### BRIEF DESCRIPTION OF THE DRAWINGS

In the following the invention will be described in greater detail by means of preferred embodiments with reference to the attached drawings, in which
Fig. 1 shows an axonometric view of a high speed electric machine.
Fig. 2 shows a cross section of a prior art radial magnetic bearing arrangement.
Fig. 3 shows an axonometric view of a prior art radial magnetic bearing arrangement.
Fig. 4 shows a further cross section of a prior art radial magnetic bearing arrangement.
Fig. 5 shows a further axonometric view of a prior art radial magnetic bearing arrangement.
Fig. 6 shows the S-mode vibration of a prior art radial bearing arrangement.
Fig. 7 shows a cross section of a radial bearing arrangement according to the invention.
Fig. 8 shows an axonometric view of a radial bearing arrangement according to the invention.

### DETAILED DESCRIPTION OF EMBODIMENTS OF THE INVENTION

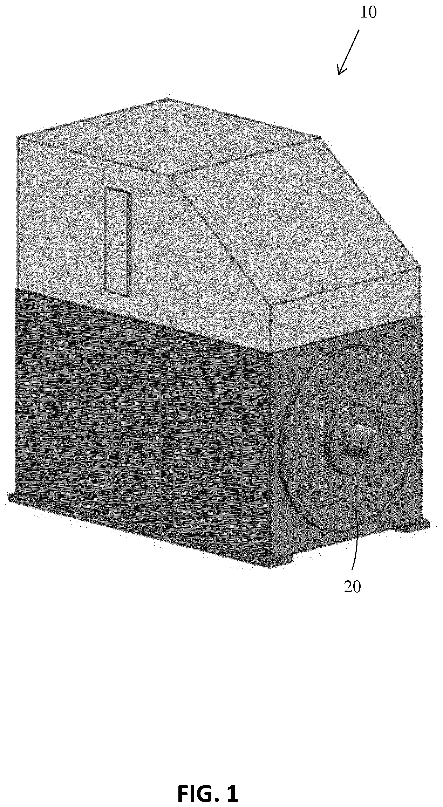

Fig. 1 shows an axonometric view of a high speed electric machine. The figure shows only the outer casing 10 of the electric machine. The electric machine comprises an electric motor and a drive device connected directly to the shaft of the electric motor. The shaft of the rotor of the electric machine comprises at both ends a radial magnetic bearing. The radial magnetic bearing is supported on a bearing shield 20 and the bearing shield 20 is supported on the frame construction of the electric machine.

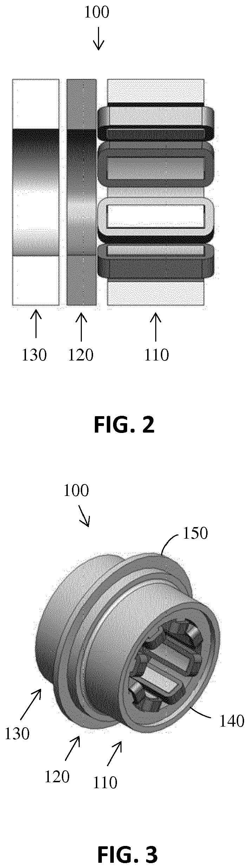

Fig. 2 shows a cross section and Fig. 3 shows an axonometric view of a prior art radial magnetic bearing arrangement. The radial magnetic bearing arrangement 100 comprises an actuator 110, a position sensor 120 and a safety bearing 130. A radial magnetic bearing comprises at least one position sensor 120 i.e. there could be several position sensors 120. The actuator 110, the position sensor 120 and the safety bearing 130 are fitted into a first cylinder 140. There is further a flange 150 on the outer surface of the first cylinder 140. The first cylinder 140 with the actuator 110, the at least one position sensor 120 and the safety bearing 130 situated inside the first cylinder 140 and the flange 150 situated outside the first cylinder 140 form a complete prior art radial magnetic bearing package 100. The safety bearing 130 is a mechanical bearing arrangement supporting the shaft of the rotor during stand still or possible faults in the radial magnetic bearings.

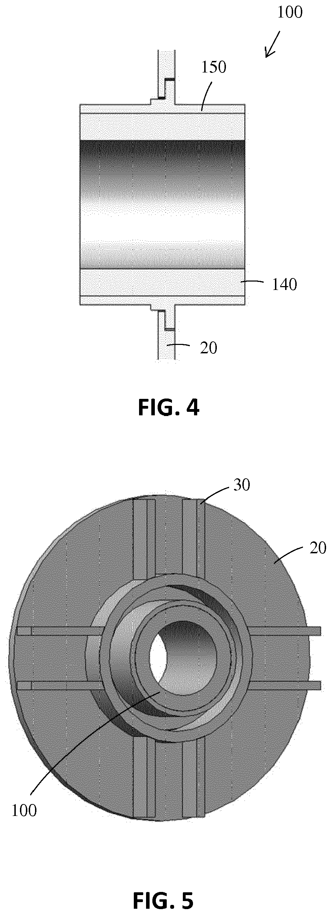

Fig. 4 shows a further cross section and Fig. 5 shows a further axonometric view of a prior art radial magnetic bearing arrangement. The figures show that the radial magnetic bearing package 100 is attached through the flange 150 to the bearing shield 20. Figure 5 shows that there could be stiffening means 30 e.g. stiffening ribs attached to the bearing shield 20. The stiffening means 30 will increase the bending stiffness of the bearing shield 20.

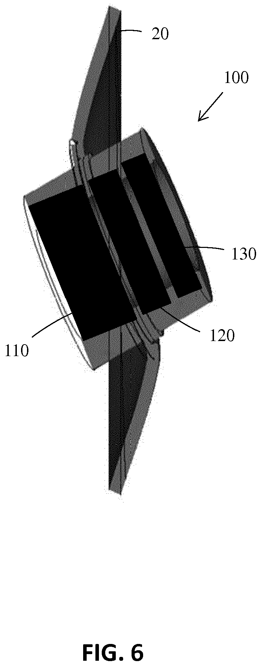

Fig. 6 shows the S-mode vibration of a prior art radial bearing arrangement. The attachment between the flange 150 and the bearing shield 20 acts like a hinge when the bearing shield 20 vibrates.

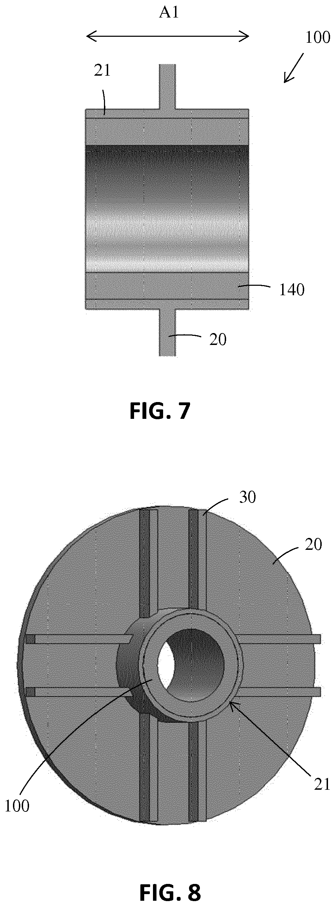

Fig. 7 shows a cross section and Fig. 8 shows an axonometric view of a radial bearing arrangement according to the invention. The radial magnetic bearing package 100 is integrated into the bearing shield 20.

The radial magnetic bearing arrangement 100 comprises an actuator 110, at least one position sensor 120 and a safety bearing 130. The actuator 110, the position sensor 120 and the safety bearing 130 are fitted into a first cylinder 140. There is, however, no flange 150 attached to the outer surface of the first cylinder contrary to prior art magnetic bearing arrangements 100.

The bearing shield 20 comprises a cylindrical centre portion 21. There could also be stiffening means 30 e.g. stiffening ribs attached to the bearing shield 20. The stiffening means 30 will increase the bending stiffness of the bearing shield 20.

The first cylinder 140 comprising the radial magnetic bearing package 100 is fitted into the cylindrical centre portion 21 of the bearing shield 20. This integration of the radial magnetic bearing package 100 with the bearing shield 20 into a single unit increases the bending stiffness of the construction compared to prior art arrangements. The first cylinder 140 can be fitted into the cylindrical centre portion 21 of the bearing shield 20 by thermal adaptation. The outer diameter of the first cylinder 140 is a little bit bigger than the inner diameter of the cylindrical centre portion 21 of the bearing shield 20. The cylindrical centre portion 21 of the bearing shield 20 is heated so that the inner diameter of the cylindrical centre portion 21 of the bearing shield 20 expands a little bit. The first cylinder 140 can thereafter be pushed into the expanded cylindrical centre portion 21 of the bearing shield 20. The inner diameter of the cylindrical centre portion 21 of the bearing shield 20 will then again contract after the cylindrical centre portion 21 has cooled down. The first cylinder 140 will thereby be firmly positioned in the cylindrical centre portion 21 of the bearing shield 20.

The first cylinder 140 is attached through its whole axial length A1 to the cylindrical centre portion 21 of the bearing shield 20. The attachment between the first cylinder 100 and the cylindrical centre portion 21 of the bearing shield 20 becomes very stiff due to this integration.

It is naturally also possible to have longitudinal grooves on the inner surface of the cylindrical centre portion 21 of the bearing shield 20 and corresponding longitudinal ribs on the outer surface of the first cylinder 140 or vice a versa. The ribs would fit into the grooves when the first cylinder 140 is positioned in the cylindrical centre portion 21 of the bearing shield 20. Rotational movement between the first cylinder 140 and the cylindrical centre portion 21 of the bearing shield 20 would thereby be eliminated.

The first cylinder 140 and the bearing shield 20 are advantageously made of steel. The bearing shield 20 could e.g. be made by casting.

The axial magnetic bearing is not shown in the figures as it is not as such part of the invention. Any conventional axial magnetic bearing arrangement could be used in the electric machine comprising the radial magnetic bearing arrangement according to the invention.

It will be obvious to a person skilled in the art that, as the technology advances, the inventive concept can be implemented in various ways. The invention and its embodiments are not limited to the examples described above but are defined by the scope of the claims.

## Claims

1. An electric machine comprising an electric motor and a drive device fitted into a common frame so that the drive device is directly connected to a shaft of the electric motor, each end of the shaft being rotatably supported on a radial magnetic bearing (100), the radial magnetic bearing (100) being supported with a bearing shield (20) comprising a cylindrical centre portion (21) at the frame of the electric machine, each radial magnetic bearing (100) comprising an actuator (110), a radial position sensor (120) and a safety bearing (130), the radial magnetic bearing (100) being fitted into a first cylinder (140), the first cylinder (140) being attached with thermal adaptation through its whole axial length (A1) to the cylindrical centre portion (21) of the bearing shield (20), whereby the radial magnetic bearing (100) and the bearing shield (20) become integrated into a single unit.

2. The electric machine according to claim 1, **characterized in that** the power of the electric machine is at least 1 MW and the rotation speed of the electric machine is at least 10 000 rpm.

## Patentansprüche

1. Elektrische Maschine, umfassend einen Elektromotor und eine Antriebseinrichtung, in einen gemeinsamen Rahmen eingepasst, so dass die Antriebseinrichtung direkt mit einer Welle des Elektromotors verbunden ist, wobei jedes Ende der Welle drehbar auf einem radialen Magnetlager (100) getragen wird, wobei das radiale Magnetlager (100) mit einem Lagerschild (20) getragen wird, das einen zylindrischen Mittelabschnitt (21) am Rahmen der elektrischen Maschine umfasst, wobei jedes radiale Magnetlager (100) einen Aktuator (110), einen Radialpositionssensor (120) und ein Sicherheitslager (130) umfasst, wobei das radiale Magnetlager (100) in einen ersten Zylinder (140) eingepasst ist, wobei der erste Zylinder (140) mit thermischer Anpassung über seine ganze axiale Länge (A1) an dem zylindrischen Mittelabschnitt (21) des Lagerschilds (20) angebracht ist, wodurch das radiale Magnetlager (100) und das Lagerschild (20) in einer einzelnen Einheit integriert werden.

2. Elektrische Maschine nach Anspruch 1, **dadurch gekennzeichnet, dass** die Leistung der elektrischen Maschine mindestens 1 MW beträgt und die Drehzahl der elektrischen Maschine mindestens 10 000 min⁻¹ beträgt.

## Revendications

1. Machine électrique comportant un moteur électrique et un dispositif d'entraînement installés dans un bâti commun de telle façon que le dispositif d'entraînement soit relié directement à un arbre du moteur électrique, chaque extrémité de l'arbre étant guidée en rotation sur un palier magnétique radial (100), le palier magnétique radial (100) étant soutenu avec une gaine (20) de palier comportant un partie centrale cylindrique (21) au niveau du bâti de la machine électrique, chaque palier magnétique radial (100) comportant un actionneur (110), un capteur (120) de position radiale et un palier (130) de sécurité, le palier magnétique radial (100) étant ajusté dans un premier cylindre (140), le premier cylindre (140) étant fixé avec une adaptation thermique sur toute sa longueur axiale (A1) à la partie centrale cylindrique (21) de la gaine (20) de palier, le palier magnétique radial (100) et la gaine (20) de palier devenant ainsi intégrés en une seule unité.

2. Machine électrique selon la revendication 1, **caractérisée en ce que** la puissance de la machine électrique est d'au moins 1 MW et **en ce que** la vitesse de rotation de la machine électrique est d'au moins 10 000 t/mn.
